# EUROPEAN PATENT APPLICATION

(11) **EP 0 793 939 A1**
(43) Date of publication of application: **10.09.1997**
(21) Application number: 97101888.2
(22) Date of filing: 06.02.1997
(51) Int. Cl.: A47L 15/46, A47L 15/23, A47L 15/42, D06F 33/02, G01H 3/08

(54) **Washing machine**

(30) Priority: 04.03.1996 IT PN960015
(71) Applicant: ZELTRON S.p.A., I-33030 Campoformido, Udine (IT)
(72) Inventor: Cauz, Mirco, 33070 S. Vito al Tagliamento, Pordenone (IT); Filippetti, Mario, 33030 Campoformido, Udine (IT)
(74) Representative: Agostini, Agostino

(57) **Abstract**

Washing machine comprises an acoustic detector (11) adapted to generate an information signal in response to the noise generated in the washing vessel of said machine during the operation thereof. To the acoustic detector (11) there are associated, inside the machine, processor means (12) that process and discriminate said information signal so as to both issue output signals that are indicative of at least one of the parameters of the operation cycle of the machine and to drive, with the same output signals, operational elements provided in the machine. The processor means (12) are preferably adapted to process and discriminate the information signal on the basis of wavelet transforms.

## Description

The present invention refers to a washing machine comprising a washing vessel, means to let at least a fluid into said vessel, control means, a plurality of operational elements and a programme sequence control unit adapted to control, through the combined actuation of said operational elements, the carrying out of at least an operation cycle, said programme sequence control means being further driven by said control means via signals that are indicative of respective parameters of said operation cycle.

In particular, although not solely, this invention refers to a household-type dishwashing machine which is connected to its water supply through at least an electromagnetic valve provided to let water into a washing vessel in which there is arranged at least a rotating spray arm adapted to spray the fluid on to the washload items that are appropriately loaded in an associated basket or rack.

A dishwashing machine of the above illustrated type is known from the patent specification EP-A-0 118 719 to be provided with a programme sequence control unit that triggers an electromagnetic valve to open in view of letting the washing liquor into the washing vessel under simultaneous operation of a recirculating pump for the washing liquor. A pressure transducer, which is adapted to generate an output signal that is proportional to the variations in the water delivery pressure, is connected to the delivery side of said pump. Such an output signal is effective in causing the electromagnetic valve to close when the amplitude of the pressure variations decreases below a pre-determined value corresponding to a precisely defined level of the water in the washing vessel.

Although such a solution is effective in ensuring a good functionality, the practical implementation of such an invention appears to be quite complicated, implying relatively elevated costs.

It is therefore a first purpose of the present invention to propose a simple, low-cost and very accurate system for controlling the level of the water let into the washing vessel and, therefore, used for washing purposes.

A dishwashing machine of the afore mentioned type is also known from the document EP-A-0 053 231 to be provided with electromagnetic means in order to make sure that the rotating spray arm is rotating correctly and, therefore, that all of the washload items are actually invested by the washing liquor sprayed by said rotating arm. Should this condition fail to occur, a generator associated therewith sends out a signal to alert the user or operator of the machine so that he or she can intervene to remove the irregular condition. The related control means are formed by a metal element provided at an end portion of the rotating spray arm, and a pick-up coil arranged on a wall of the washing vessel.

Such a construction, although quite satisfactory from a functional point of view when the machine is new, fails to ensure the required functionality when either one and/or the other of the above cited control means start to get fouled by deposits of detergent, food remains, limestone and the like, which alter the electromagnetic field and, as a result, the output signal of the therewith associated generator.

It therefore is a second purpose of the present invention to make the monitoring function of the correct rotation of the rotating spray arm independent from the irregular conditions that may occur in the washing vessel and, therefore, ensure that the effect resulting from said monitoring function is correct throughout the operating life of the dishwashing machine, regardless of its age.

The above stated aims are reached in a washing machine characterized in that said control means comprise at least an acoustic detector capable of generating, dependeing on the noise being generated in the washing vessel during the operation cycle of the machine, a corresponding information signal, and further comprise processor means that, after having processed and discriminated said information signal, issue output signals that are indicative of at least one of said parameters so as to correspondingly drive at least one of said operational elements.

In a preferred embodiment thereof, the present invention calls for the use, by the processor means provided in the washing machine, of wavelet transforms to process and discriminate the information signal driving said operational elements.

Finally, from the document EP-A-0 237 994 a dishwashing machine comprising at least two rotating spray arms and two associated racks or baskets provided to hold the washload items is known to be characterized in that it has a shut-off element included in the delivery circuit of the pump recirculating the washing liquor within the washing vessel of the machine. Said shut-off element is subject to selective displacements between two positions, ie. a stable position and an unstable one, so as to enable the rotating spray arms to be supplied with the liquor in an intermittent and alternate manner. Said displacements are governed directly by the pressure of the liquor, so that the duration of the permanence of said element in each one of said two positions is widely variable depending on the duration of the energization and de-energization periods of the pump as determined by the programme sequence control unit of the machine. In other words, it is the washing programme (eg., normal, intensive, light or delicate washing programme) selected each time by the user by correspondingly setting the programme sequence control unit that eventually determines the energization/de-energization periods of the recirculation pump and, as a result, the frequency and duration of the periods of alternate liquor supply to the ratating spray arms.

A further purpose of the invention, in some preferred embodiments thereof, is to provide an intermittent, alternate supply of washing liquor to the rotating spray arms on the basis of an "identification" by the same machine of the kind and amount of washload items loaded in the rack (or racks), so as to ensure ina fully automatic manner that all of said washload items are washed with the actual amount of liquor that is most suitable in view of obtaining the best washing result with the lowest possible usage of water.

In order to gain a better insight into it, the present invention will be described below with reference to a household dishwashing machine with the aid of the accompanying drawings, in which:
- Figure 1 is a schematical view of a dishwashing machine provided with an acoustic detector;
- Figure 2 is a view of a first information signal (sampling quanta vs. operating time) reaching the acoustic detector during the operation of the machine shown in Fig. 1;
- Figure 3 is a view illustrating the power envelopes of the signal shown in Fig. 2, referring to two opposite events that may occur during the operation of the machine;
- Figure 4 is a view illustrating, in the form of superposed histograms, the output signals issued by the processor means of the machine after having processed the information signal relating to the same two conditions of Figure 3;
- Figure 5 is a view illustrating the acoustic spectrum emitted by the dishwashing machine according to Fig. 1 when operating under no-load conditions;
- Figure 6 is similar to Figure 5, but, rather than to a dishwashing machine operating under no-load conditions, it refers to a dishwashing machine with china dishes loaded in the rack associated to the rotating spray arm;
- Figure 7 is a view illustrating another information signal (sampling quanta vs. operating time) reaching the acoustic detector during the operation of the machine shown in Fig.1, and namely during the transient period relating to the water inlet in the washing vessel;
- Figure 8 is a view illustrating the output signal (sound power vs. operating time) emitted by the processor means of the machine after processing the information signal shown in Fig. 7 using the Daubechies wavelet transform;
- Figure 9 is a view illustrating the power envelope of the signal of Figure 8.

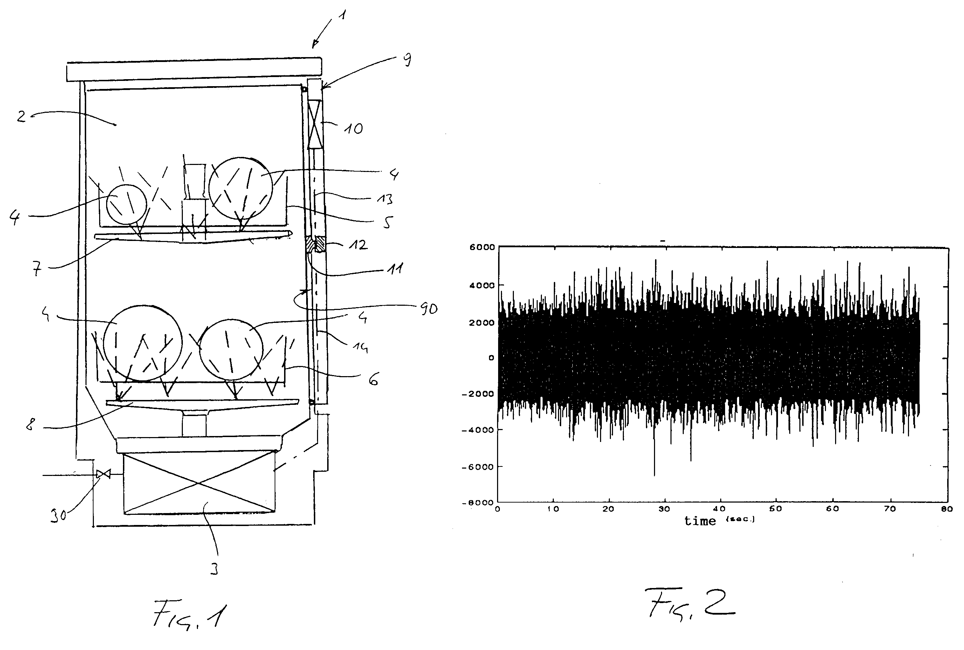

As illustrated schematically in Figure 1, a household dishwashing machine represented there in its median longitudinal section is shown to include an outer casing 1 enclosing a washing vessel 2 and, usually below the latter, a plurality of operational elements (pumps, electromagnetic valves, heating elements and the like) and control means of a traditional type (such as thermostats and the like) which are generally referred at 3. The water required for washing, coming from the water mains, is let into the washing veswsel 2 through at least an electromagnetic valve 30. The washing action performed on the washload items 4, which are arranged on racks or baskets 5 and 6 accomodated in the washing vessel 2, is carried out by spraying them from two-sided rotating spray arms 7 and 8, each one of which is associated to a respective one of said racks 5 and 6. For loading the washload items 4 on the racks 5 and 6, which can to this purpose be drawn out of the washing vessel 2, the dishwashing machine is also provided with a door 9. In the thickness of said door assembly 9 there is accomodated not only, in a manner that is well-known to all those who are skilled in the art, the programme sequence control unit 10 with its actuating member and the signalling means of the machine, but also, according to an important feature of the invention, an innovative control means formed by an acoustic micro-detector 11 (eg. a capacitor or electret-type microphone transmitter). Alternatively, the acoustic detector 11 can be situated in another location in the machine, if this is allowed for by the construction of the latter.

Another basic feature of the present invention lies in associating to the acousting detector 11 a processor 12 that is capable of processing and discriminating the signal that reaches the same detector 11. Also the processor 12 is housed in the machine, eg. behind the acoustic detector 11. As a example of processor suitable for use in the case of a dishwashing machine, the type 68HC05B16 produced by Motorola can be cited. The acoustic detector 11/processor 12 assembly is connected, via electric wires 12 and 13, to the programme sequence control unit 10, the operational elements and traditional control means 3, as well as the signalling means of the machine.

The reason behind the use of the processor 12 lies in the fact that the acoustic signals reaching the acoustic detector 11, further to not being generally stationary, are subject to disturbances and have differing form and structures, so that it is impracticable to use them unprocessed, for instance to drive, through the programme sequence control unit 10, the operational elements 3. The processor 12 performs on the contrary a multiresolution analysis of the signals, ie. it decomposes the signals so as to enable a thorough, accurate analysis to be performed of both their details and their overall structure. According to another important feature of the invention, the processor 12 makes use, to such a purpose, of a mathematical tool of the "wavelet transform" type which enables the signals to be modified to such an extent that some peculiarities thereof, which would otherwise not be discernible in the original signal, are made fully visible. It further enables the signals to be used in view of enhancing the characteristics and the performance capabilities of the machine. In particular, owing also to its low computational complexity, the wavelet transform proves useful in the analysis of short-duration transient phenomena and the parametric identification of signals from noisy and/or incomplete experimental signals. In particular, in the case of signals that are present for a discrete unit of time and consist of N samples, it is possible, by imposing orthogonality conditions on the wavelets, to obtain a signal in a time that is directly proportional to N.

A first practical embodiment of the invention is as follows.

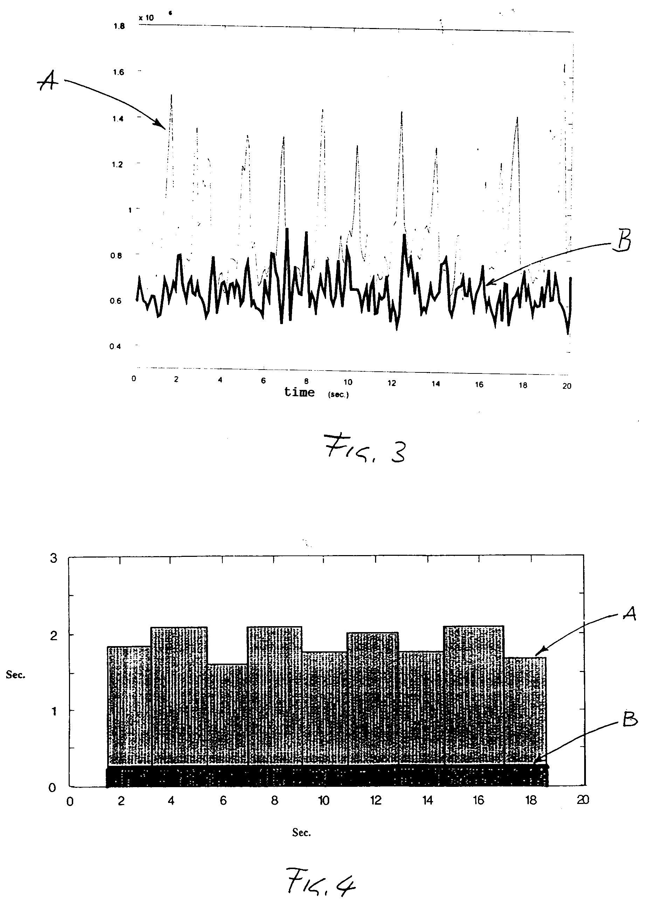

The noise generated in the washing vessel of a dishwashing machine during the operation thereof (noise that is picked up by the acoustic detector 11) is substantially due to the water that, when sprayed by the rotating spray arms 7 and 8 under the pressure that is exerted by a recirculating pump, impinges in particular against the walls of the washing vessel 2 and the inner door 90. Figure 2 shows such a signal at a given moment in the operation cycle of the machine.

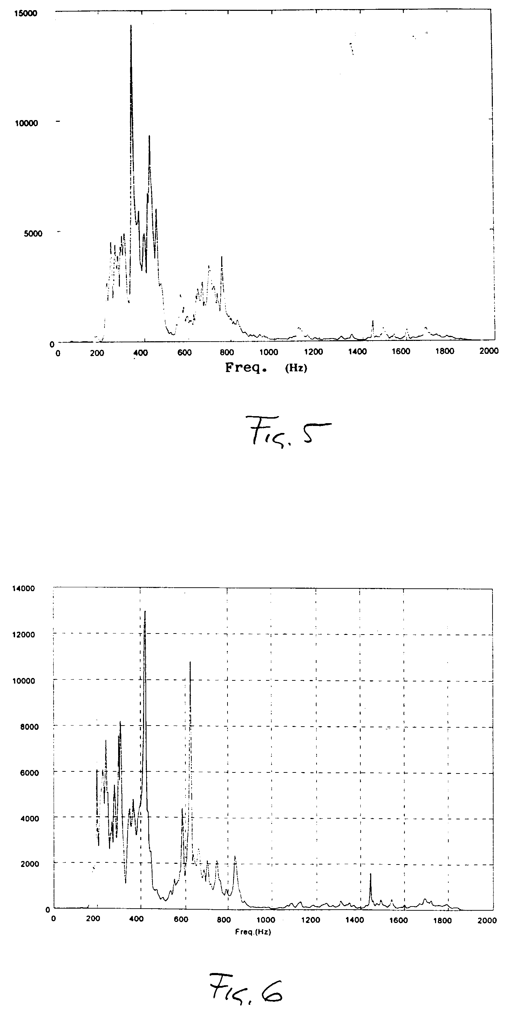

Noticing that the acoustic detector 11, which is situated on the "dry" surface of the inner door 90, can be assumed as being punctiform, and that each one of said rotating spray arms 7, 8 is formed by two symmetrical arms, it can be inferred that the emission of sound is a quasi-periodical phenomenon, with a period that is more or less equal to half the rotation period of the rotating spray arm. This can be inferred also from Figure 3 which shows the power envelopes of the signal, ie. the sound intensity as a function of the cycle time, in two mutually opposite circumstances, ie. when the rotating spray arm is rotating regularly (curve A) and when the same rotating spray arm is standing still (curve B). The multiresolution analysis process, based on a wavelet transform, leads to the emission, by the processor 12, of a signal having such a form as to enable the periodicity characteristics thereof to be detected, as shown in Figure 4. This Figure shows, again as a function of the cycle time, the histograms A (spray arm rotating regularly) and B (spray arm standing still) of the periods of the waveforms of Figure 3. Let us consider, for instance, the first bar of the histograms A. Ther physical meaning thereof is that, in the period of time included between 1.6 and 3.4 seconds (values that delimit said bar in the abscissa), the waveform is periodical with a period of 1.8 seconds (height of the same bar). The second bar of the same histograms A means on the contrary that subsequently, ie. between 3.4 and 5.2 seconds, the waveform is periodical with a period of 2.1 seconds, and so on.

It can on the other hand be noticed, in the lower portion of the same Figure 4, that the bars of the histograms B have in all cases the same height, being practically at zero. In fact, in this case, the rotating spray arm is standing still, ie. prevented from rotating, so that there is no significant periodicity of the waveform of the emitted signal, as this is on the other hand confirmed by the curve B in Figure 3.

This difference between said two definite conditions of operation of the machine makes therefore it possible for appropriate signalling means of the machine to be correspondingly activated through a signalling apparatus operating according to the output signals issued by the processor 12. In this manner the user is alerted if an irregular operating condition arises, owing for instance to a piece of cutlery that, having been loaded improperly in the rack or basket of the machine, is preventing the associated rotating spray arm from rotating in the correct way, and can therefore intervene to remove the causes of such an irregular condition.

According to yet another feature of the invention, thanks to the acoustic detector 11 and the therewith associated processor 12, it is possible for the kind and/or amount of washload items loaded in the machine for washing to be recognized, ie. identified.

The basic vibration modes of a dishwashing machine operating under no-load conditions are known to be situated in the band ranging from 200 to 500 Hz (Fig. 5).

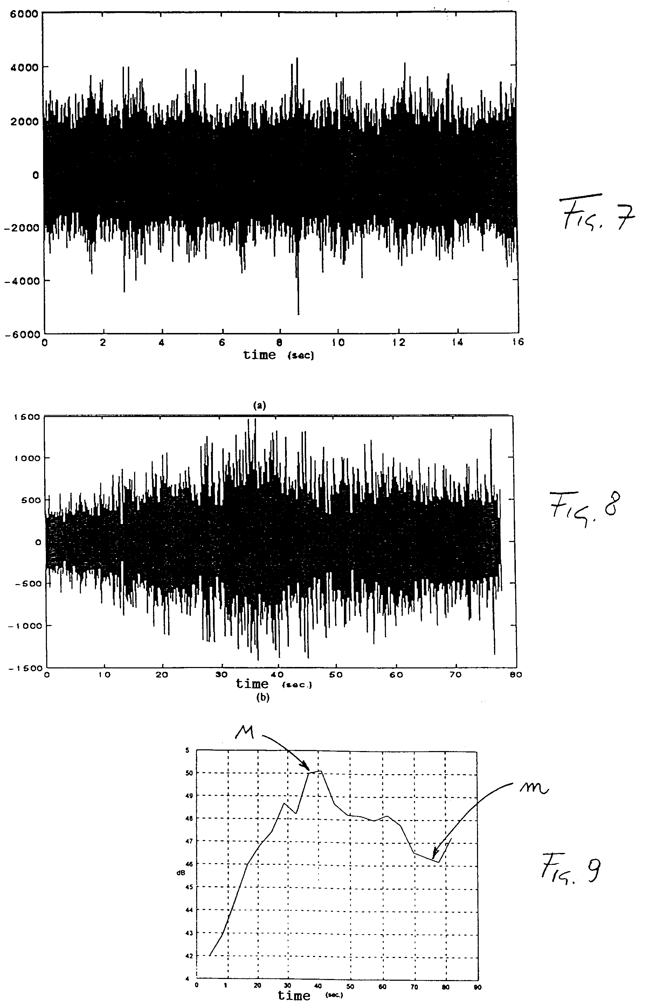

On the other side, a china dish having a diameter of 200 mm and a thickness of 3 mm will be characterized by a fundamental mode of vibration situated at approx. 650 Hz. When such a dish is loaded in a dishwashing machine according to the present invention, the spectrum of the signales issued by the processor 12 after having properly processed the noise generated by the machine and picked up by the acoustic detector 11, shows in fact a peak at 650 Hz. Such a peak is again there, albeit proportionately increased in its amplitude, when more than a dish are loaded in the dishwashing machine (Fig. 6). This applies, the necessary changes and adjustments being made, to any other type or kind of items that may be loaded in a dishwashing machine, such as for instance glasses, pans and, of course, dishes made of materials differing from china. According to the present invention, with the use of wavelet transforms, the processor 12 is capable of discriminating, from the overall noise generated by the machine, the signals relating to the items being loaded in the same machine for washing. Such signals enable therefore the presence and the composition of a washload in the dishwashing machine and therefore, when they are ultimately sent to the programme sequence control unit 10 via the electric wires 13, they bring about an automatic adjustment in the mode of the operation of the machine. For instance, in the case that the dishwashing machine is provided with at least a rotating spray arm 7 and at least an associated washload holding rack 5, said signales issued by the processor 12 can be used in view of bringing about, through the programme sequence control unit 10, a correspondingly longer or shorter washing process at a correspondingly higher or lower temperature in accordance with the "robustness" of the items 4 identified in the washload. In the case that the dishwashing machine is provided with at least two rotating spray arms 7, 8 and at least two washload holding racks 5, 6 associated thereto, said signals can on the contrary be used to enable the rotating spray arms 7, 8 to be supplied alternately and selectively at differentiated rates in accordance with the actual kind and/or amount of the items loaded in the associated washload holding racks.

According to a further feature of the present invention, it is possible for the amount of water filled into a machine, and used to wash the dishes, to be metered with the greatest possible accuracy, so as to optimize the performance of the machine (ie. the cleaning effect on the washload items) and, at the same time, the usage of water (and, therefore, the energy consumption associated therewith) by the machine.

The water inlet in the washing vessel 3 of the machine, occurring through the electromagnetic valve 30 and with the circulation pump (not shown) kept operating, is known to occupy a transient period of time at the beginning of the washing cycle. During such a transient, the noise generated by the machine, ie. the information signal picked up by the acoustic detector 11, is strongly affected by the air taken in by the circulation pump along with the water. The representation of such a signal, in the form of sampling quanta versus time, is shown in Figure 7.

By processing the noise of the machine by means of the Daubechies wavelet transform, the processor 12 works out an output signal which is mostly made up up the sound generated by the vibrations of the structure of the machine (Figure 8). The evolution versus time of the power of this output signal is shown in Figure 9 and has following physical meaning: as the water inlet in the washing vessel progresses, such a power increases until it reaches a highest peak which is identified as "M" in the above cited diagram. Then it starts to decrease until it eventually stabilises (except for a few slight oscillations) about a second value which is identified as "m" in the cited diagram. It is just the signal issued by the processor 12 when such level "m" is reached that determines, in a fully automatic manner, the de-energization of the electromagnetic valve 30, which therefore shuts off.

In other words, the washing machine according to the invention is capable of most accurately control a whole set of various important functional parameters (such as for instance the rotation of the spray arms, the distribution of the loads on the racks, the inlet of water and the like) by making use of a single acoustic detector which is simple, cost-effective and reliable. By processing and discriminating in an optimum manner in said processor the noise picked up by said acoustic detector , preferably on the basis of wavelet transforms that are particularly well-suited to the application, it is possible to work out output signals that are indicative of the different process parameters as cited above. Such output siggnals are used to drive functional means or elements of the machine which, according to the actual needs, may be simple signalling elements, operational members and/or even the programme sequence control unit of the machine, so as to enable the machine to operate according to just the parameters being detected as described above.

The advantages deriving from the present invention in terms of improved performance capabilities and reliability of dishwashing machines can be easily inferred from the above description. It will of course be appreciated that similar advantages are achievable also in clothes washing machines made in accordance with the principles of the present invention.

## Claims

1. Washing machine comprising a washing vessel (2), means (30) provided to let at least a fluid into said washing vessel (2), control means and a plurality of operational elements (3), as well as a programme sequence control unit (10) adapted to control, by the combined actuation of said operational elements (3), the execution of at least an operation cycle of the machine, said programme sequence control unit being further driven by said control means through signals that are indicative of respective parameters of said operation cycle of the machine, **characterized in that** said control means comprise at least an acoustic detector (11) adapted to generate an information signal in response to the noise generated in the washing vessel of the machine during said operation cycle, processor means (12) being provided to process and discriminate said information signal so as to be able to issue output signal that are indicative of at least one of said parameters, and to further drive operational means with said output signals.

2. Washing machine according to claim 1, **characterized in that** said processor means (12) are adapted to process and discriminate said information signal on the basis of wavelet transforms.

3. Washing machine according to claim 1, wherein the machine is a dishwashing machine and the washing vessel (2) accomodates at least a rotating spray arm (7, 8) arranged so as to spray said fluid on to the washload items, **characterized in that** said processor means (12) are adapted to process and discriminate said information signal so as to issue output signals that are indicative of the rotation of said spray arm (7, 8).

4. Washing machine according to claim 1, wherein the machine is a dishwashing machine connected to the water supply through at least an electromagnetic valve (30) provided to let water into a washing vessel (2), **characterized in that** said processor means (12) are adapted to process and discriminate said information signal so as to issue output signals that are indicative of the amount of water filled in the washing vessel (2) by said electromagnetic valve (30).

5. Washing machine according to claim 1, wherein the machine is a dishwashing machine and the washing vessel accomodates at least a rotating spray arm (7) adapted to spray said fluid on to the washload items (4) arranged in an associated support rack (5), **characterized in that** said processor means (12) are adapted to process and discriminate said information signal so as to issue output signals that are indicative of the kinds and/or the quantities of washload items (4), and to drive said programme sequence control unit (10) so as to obtain an ajustment of the physical characteristics of the fluid sprayed by said rotating spray arm (7, 8).

6. Washing machine according to claim 1, wherein the machine is a dishwashing machine and the washing vessel (2) accomodates at least a first and a second rotating spray arm (7, 8) adapted to spray said fluid on to the washload items arranged in associated support racks (5, 6), **characterized in that** said processor means (12) are adapted to process and discriminate said information signal so as to issue output signals that are indicative of the kinds and/or the quantities of washload items (4), and to drive said programme sequence control unit (10) so as to selectively control the alternate operation of the rotating spray arms (7, 8).

7. Washing machine according to claim 1, wherein the machine is a dishwashing machine and the washing vessel (2) accomodates at least a rotating spray arm (7) adapted to spray said fluid on to the washload items (4) arranged in an associated support rack (5), **characterized in that** said processor means (12) are adapted to process and discriminate said information signal so as to issue output signals that are indicative of the kinds and/or the quantities of washload items (4), and to drive said programme sequence control unit (10) and/or the operational elements (3) so as to obtain washing cycles that are carried out for a correspondingly varying duration at a correspondingly varying temperature.

8. Washing machine according to claim 1, wherein the machine is a dishwashing machine with a washing vessel (2) closed by at least a door (9), **characterized in that** said acoustic detector (11) and/or said processor means (12) are housed in the interior of the assembly of said door (9).
